# EUROPÄISCHE PATENTSCHRIFT

(11) **EP 1 164 268 B1**
(45) Veröffentlichungstag und Bekanntmachung des Hinweises auf die Patenterteilung: **24.05.2006**
(21) Anmeldenummer: 01122659.4
(22) Anmeldetag: 30.03.1998
(51) Int. Cl.: F01N 9/00, F01N 3/08

(54) **Anordnung zur Überwachung eines NOx-Speichers**
Arrangement for monitoring a NOx-trap
Dispositif pour la surveillance d'un piège à NOx

(30) Priorität: 09.04.1997 DE 19714715; 25.08.1997 DE 19736967
(43) Veröffentlichungstag der Anmeldung: 19.12.2001
(62) Teilanmeldung aus: 98917099.8
(73) Patentinhaber: Emitec Gesellschaft für Emissionstechnologie mbH, 53797 Lohmar (DE)
(72) Erfinder: Maus, Wolfgang, 53797 Lohmar (DE); Brück, Rolf, 51429 Bergisch Gladbach (DE)
(74) Vertreter: Kahlhöfer, Hermann

(56) Entgegenhaltungen:
- EP-A- 0 598 916
- DE-A- 19 511 548
- DE-C- 19 607 151
- US-A- 5 402 641

## Beschreibung

Die vorliegende Erfindung betrifft eine Anordnung zur Überwachung eines regenerierbaren NOₓ-Speichers in einem Abgasstrang, durch den ein NOₓ-haltiges Gas strömt. Die Erfindung ist insbesondere bei der Überwachung von Abgas einer Verbrennungskraftmaschine einsetzbar, insbesondere Diesel- und Magermotoren.

Das zunehmende Umweltbewußtsein und die damit einhergehende immer strenger werdende Abgasgesetzgebung macht es erforderlich, daß als schädlich eingestufte Abgaskomponenten weitestgehend reduziert werden. Der heute in Kraftfahrzeugen übliche Dreiwege-Katalysator ist in der Lage, Kohlenmonoxid (CO), Kohlenwasserstoffe (HC) und Stickstoffoxide (NOₓ) umzusetzen. Eine Überwachung und Steuerung des Katalysators erfolgt z. B. mittels einer Sauerstoff-Sonde. Diese nimmt den Restsauerstoffgehalt im Abgas auf, woraus das Luft-Brennstoff-Verhältnis des dem Motor zuzuführenden Gemisches eingestellt wird. Durch entsprechende Regelung des Restsauerstoffgehaltes wird sichergestellt, daß der Katalysator die Abgase in ausreichender Weise umsetzt. Weiterhin ist es ebenfalls bekannt, das Temperaturprofil am Katalysator zu ermitteln und dieses als Warn- oder Steuergröße zu verwenden. Eine Weiterentwicklung dieses Verfahrens gestattet es, die bei der katalytischen Reaktion freiwerdende Wärmemenge zu ermitteln und mittels einer, dem Katalysator nachgeschalteten Lambda-Sonde über eine Entropiebetrachtung auf das Abgasverhalten des Motors zurückzuschließen. Die soeben beschriebenen drei verschiedenen Möglichkeiten, einen Dreiwege-Katalysator zu überwachen, werden in der EP 0 298 240 B1 beschrieben.

Insbesondere während der Kaltstartphase fällt bei einer Verbrennungskraftmaschine ein erhöhter Schadstoffausstoß an. Um diesen zu reduzieren, werden beheizte Katalysatoren im Abgasstrang einer Verbrennungskraftmaschine angesetzt. Der Betrieb eines derartigen Katalysators geht zum Beispiel aus der WO 93/17228 bzw. der dazu äquivalenten EP 0 628 134 B1 hervor. Die Verwendung von Adsorbern zur Speicherung von während der Startphase anfallenden unverbrannten Kohlenwasserstoffen und deren Freigabe bei betriebsheißem Katalysator gehört ebenfalls zum Stand der Technik. Beides wird beispielsweise in der EP 0 485 179 beschrieben. Gerade für die katalytische Umsetzung von Stickstoffoxiden haben sich Zeolithe und andere Werkstoffe als geeignet erwiesen, die auch als Kohlenwasserstoff-Speicher einsetzbar sind. Geeignete Katalysatoren werden beispielsweise in der EP 0 459 396 und der EP 0 286 967 offenbart.

Die Betriebsfähigkeit eines Katalysators wird also, wie oben beschrieben, dadurch überwacht, daß seine katalytische Wirkung während des Betriebes überprüft wird. Verschiedene Verfahren dazu werden in der WO 92/03643 bzw. der dazu äquivalenten EP 0 545 976 B1, der WO 94/21902, der WO 91/14855 bzw. der dazu äquivalenten EP 0 521 052 B1, der WO 92/03642 bzw. der dazu äquivalenten EP 0 545 974 B1 und der DE 26 43 739 beschrieben. Letztere offenbart beispielsweise, wie über eine Temperaturvergleichsmessung mit Hilfe zweier Temperaturfühler die am Katalysator ablaufende Reaktion gemessen wird. Die so ermittelte Temperaturdifferenz gibt einen Hinweis darauf, ob der Katalysator noch funktionsfähig ist oder nicht. Diese Art der Temperaturüberwachung ist nicht nur bei einem Hauptkatalysator, sondern auch bei einem Vorkatalysator anwendbar.

Ein Temperaturmeßfühler zur Überwachung ist beispielsweise bei aus teilweise strukturierten Blechlagen aufgebauten Wabenkörpern zwischen diesen anbringbar. Dieses ist in der EP 0 603 222 B1 beschrieben.

Die Betriebsweise von Katalysatoren hängt von der Betriebsweise der Verbrennungskraftmaschine ab. Bei stationären Verbrennungskraftmaschinen ist in Deutschland die TA-Luft die einzuhaltende Verordnung. Da die Stickoxidbegrenzung von der Brennstoffwärmeleistung der Verbrennungskraftanlage und von der Motorenart abhängt, führte der Gesetzgeber eine sogenannte Dynamisierungsklausel für Selbstzündungsmotoren ein: Entsprechend dem Stand der Technik sind motorische und andere Maßnahmen zur Verminderung von Emissionen auszuschöpfen. Hintergrund der Dynamisierungsklausel war der 1985 nicht hinreichende Reifegrad von Entstickungsanlagen. Für stationär betriebene Verbrennungskraftanlagen wird zur Entstickung Harnstoff verwendet.

Bei Verbrennungskraftmaschinen für Kraftfahrzeuge scheitert die Verwendung von Harnstoff u.a. an dem dafür mitzuführenden Tank und dessen Gewicht. Ausgehend von den drei hinsichtlich ihrer Bildung unterscheidbaren Stickstoffoxiden, nämlich Brennstoff-, promptes und thermisches Stickstoffoxid, werden andere Wege gesucht, die Stickoxidbildung insbesondere des thermischen Stickoxides niedrig zu halten. Bei Nutzfahrzeugen ist es bekannt geworden, eine Abgasrückführung mit rückgekühlten Abgasen durchzuführen. Auch ist es bekannt, daß durch Wassereinspritzung die NOₓ-Emissionen reduziert werden können. Jedoch besteht bezüglich dieser Möglichkeit das Problem der Frostsicherheit und Mitführung des Betriebsmittels Wasser. Ein anderer Weg, die Stickoxid-Emissionen zu verringern, besteht darin, diese zwischenzuspeichem. Dieses ist beispielsweise möglich mittels eines Speichers, der Barium oder Platin enthält.

Aufgabe der vorliegenden Erfindung ist es nun, eine Anordnung geschaffen, die eine Überprüfung der Funktionsfähigkeit des NOₓ-Speichers zulässt und die besonders raumsparend in einem Abgasstrang einsetzbar ist.

Die vorliegende Aufgabe wird mit einer Anordnung mit den Merkmalen des Anspruches 1 gelöst. Weitere vorteilhafte Merkmale und Ausgestaltungen sind in den abhängigen Ansprüchen angegeben.

Demnach hat die erfindungsgemäße Anordnung zur Überwachung eines regenerierbaren NOₓ-Speichers (2) mittels Temperaturmessung, wenigstens folgende Komponenten:
- einen regenerierbaren NOₓ-Speicher (2),
- Mittel zur Regenerierung des NOₓ-Speichers (2),
- einen Temperatursensor (4) zur NOₓ-Speicher-Überwachung im Abgasstrom (5),
- ein elektronisches Bauteil (6), das eine Verbindung zu dem Temperatursensor (4) hat, einen Grenzwert für eine Stickoxidspeicherfähigkeit des NOₓ-Speichers (2) berechnet und bei Überschreiten eines vorgebbaren Grenzwertes für das NOₓ eine Regenerierung auslöst,
- einen Dreiwege-Katalysator (9), der in einer Durchströmungsrichtung durch den NOₓ-Speicher (2) gesehen, hinter diesem liegt,
- eine NOₓ-Quelle (3) in Strömungsrichtung vor dem NOₓ-Speicher (2) und
- ein Management zur Steuerung und/oder Regelung zumindest des elektronischen Bauteils (6) zur Temperaturmessung wie zur Regenerierung.
Die Anordnung zeichnet sich dadurch aus, daß eine Sauerstoffspeicherfähigkeit des NOₓ-Speichers (2) bezogen auf einen Normzustand etwa ein Drittel oder geringer ist als die des nachfolgenden Drei-Wege-Katalysators (9).

Ein Verfahren zur Überwachung eines regenerierbaren NOₓ-Speichers in einem Abgasstrang, durch den NOₓ-haltiges Gas strömt, sieht eine Durchführung einer Temperaturmessung im Abgasstrang vor, aus der auf die Betriebsfähigkeit, den Betriebszustand und/oder auf die Speicherkapazität des NOₓ-Speichers geschlossen wird. Als Abgasstrang sind all diejenigen Leitungen zu verstehen, die das von einer NOₓ erzeugenden Quelle, beispielsweise eine Verbrennungskraftmaschine, stammende Abgas wegführen. Die Betriebsfähigkeit sagt aus, ob der NOₓ-Speicher überhaupt noch in der Lage ist, Stickoxide zu speichern. Mittels der Überwachung der Betriebsfähigkeit ist durch Vorgabe von einem Grenzwert oder einer Bandbreite bzgl. der gemessenen Temperatur auf eine, den Abgasvorschriften entsprechende Betriebsfähigkeit des NOₓ-Speichers abzielende Überprüfung möglich. Der Betriebszustand gibt eine zumindest für den Zeitpunkt der Temperaturmessung geltende Aussage bezüglich einer Wertung des Verhaltens des Speichers in bezug auf beispielsweise vorgegebene Abgasgrenzwerte, Temperaturen, Alterungszustand o.ä. und ist eine qualitative Aussage. Die Speicherkapazität des NOₓ-Speichers dagegen ist eine quantitative Aussage, die auf einen Normzustand bezogen wird.

Die Durchführung der Temperaturmessung erfolgt ggf. zu einem definierten Zeitpunkt, was vorteilhafterweise durch eine Steuerung oder sogar Regelung für den NOₓ-Speicher oder in Verbindung mit weiteren, zusätzlich im Abgasstrang angeordneten Vorrichtungssteuerungen durchführbar ist. Der definierte Zeitpunkt ist in einer Ausführung des Verfahrens entsprechend der Betriebsweise des NOₓ-Speichers einstellbar. Ist der Speicher einer Verbrennungskraftmaschine nachgeschaltet und wird diese in etwa unter konstanter Last gefahren, wird der Zeitpunkt der Temperaturmessung so eingestellt, daß bei einer bekannten möglichen Speichermenge von NOₓ des Speichers dieser Grenzwert mit Sicherheit nicht überschritten wird. Bei der Berücksichtigung eines derartigen Grenzwertes können neben Parametern wie Aufbau, Material und Betriebsweise des NOₓ-Speichers auch zeitbedingte Faktoren wie Alterung eingehen. Die Überwachung erfolgt in einer Ausführung des Verfahrens durch eine kontinuierliche Temperaturmessung, in einer anderen Ausführung durch voneinander beabstandete, einzelne Temperaturmessungen. Weiterhin sind zwei oder mehr aufeinanderfolgende Temperaturmessungen miteinander verknüpfbar. Bei aufeinanderfolgenden Temperaturmessungen wird in einer Weiterentwicklung des Verfahrens der Abstand zwischen diesen verkürzt, wenn der NOₓ-Speicher eine signifikante Reduzierung seiner Fähigkeiten aufweist. Dadurch ist sichergestellt, daß sein nicht mehr tolerierbarer Speicherbetrieb frühzeitig registriert wird und entsprechende Maßnahmen ergriffen werden können.

Die Temperaturmessung im Abgasstrang erfolgt entweder als direkte Temperaturmessung von zumindest einem Teil des NOₓ-Speichers oder als eine mittelbare Temperaturmessung mittels des den NOₓ-Speicher durchströmenden Gasstromes. Die direkte Temperaturmessung erfolgt im Material des Speichers selbst. Ein Temperatursensor ist dazu beispielsweise auf der Oberfläche, in einer Oberschicht oder direkt im Material des NOₓ-Speichers angeordnet. Die Art des Stromsensors genauso wie der Ort seiner Anbringung hängt davon ab, wie der NOₓ-Speicher aufgebaut ist. Der NOₓ-Speicher kann aus Keramik, gesintert oder extrudiert, aber genauso aus Blechen, die beispielsweise zumindest teilweise strukturiert geschichtet sind, aufgebaut sein. Auch die Sinterung bzw. Extrudierung von Metall mit Keramikpulver erweist sich als vorteilhaft, um die verschiedenen Eigenschaften der Materialien miteinander verknüpfen zu können. Der NOₓ-Speicher ist als Wabenkörper monolithisch ausgestaltbar. Andere Formgebungen sind ebenfalls möglich. Das NOₓ₋speichernde Material ist in einer vorteilhaften Ausführung im Wandmaterial verteilt, insbesondere so, daß die Speicherkapazität vollständig ausgenutzt werden kann. Eine andere günstige Ausgestaltung sieht eine Beschichtung beispielsweise eines aus Blechen aufgebauten NOₓ-Speichers vor. Weist das Material des NOₓ-Speichers eine schlechte Wärmeleitfähigkeit auf, ist der Temperatursensor nahe zu einer durch das von NOₓ-haltigem Gas überströmten Oberfläche anzubringen. Bei Speichern mit guter Wärmeleitfähigkeit, beispielsweise metallenen Speichern, ist ein Temperatursensor einsetzbar, wie er aus der im Stand der Technik schon genannten EP 0 603 222 B1 offenbart ist. Dazu muß sichergestellt sein, daß es durch die Beschichtung eines derartigen Körpers nicht zu Verfälschungen der Temperaturmessung kommt.

Die mittelbare Temperaturmessung mittels des durch den NOₓ-Speicher durchströmenden Gasstromes wird durch ein in der Gasströmung sitzenden Temperatursensor durchgeführt. Dazu sind alle im Stand der Technik bekannten und geeigneten Temperatursensoren wie Thermo-Elemente oder ähnliches verwendbar. Der Temperatursensor wird innerhalb des Speichers in einem der Kanäle angeordnet. In einer weiteren vorteilhaften Ausgestaltung des Verfahrens sitzt der Temperatursensor in der Gasströmung hinter dem NOₓ-Speicher, insbesondere vor einem eventuell nachgeschalteten Dreiwege-Katalysator. An dieser Anordnung läßt sich nun auch am einfachsten der Begriff der mittelbaren Temperaturmessung erklären. Es wird dabei nämlich vom Gasstrom auf den NOₓ-Speicher zurückgeschlossen

Die Temperaturmessung erfolgt vor, während und/oder nach einer Regenerationsphase des NOₓ-Speichers. Bei diesen definierten Zeitpunkten haben sich die folgenden Kombinationen als besonders vorteilhaft erwiesen:
- Eine Temperaturmessung während, vor oder nach der Regenerationsphase: Über eine Messung zu einem bestimmten Zeitpunkt oder auch über einen Zeitraum ist eine Aussage zum NOₓ-Speicher möglich,
- eine Temperatunnessung unmittelbar vor der Regenerationsphase und während dieser: Aus der Temperaturdifferenz kann auf den NOₓ-Speicher zurückgeschlossen werden,
- während und nach der Regenerationsphase: Auch dieses läßt beispielsweise aus einer Temperaturdifferenz einen Schluß auf den Speicher und insbesondere auch auf die Qualität der Regeneration zu,
- unmittelbar vor und unmittelbar nach der Regenerationsphase: Die Temperaturdifferenz beider Messungen ergibt ebenfalls eine Aussage bezüglich der Qualität der Regeneration, wobei daraus wieder auf den NOₓ-Speicher zurückgeschlossen werden kann; für eine Aussage in die Zukunft hat es sich als vorteilhaft erwiesen, zumindest zwei Temperaturmessungen nach der Regenerationsphase miteinander zu verknüpfen. Die dabei auftretende Temperaturverschiebung in Beziehung zum zeitlichen Abstand der beiden Messungen läßt eine zeitliche Aussage bezüglich des Verhaltens des NOₓ-Speichers zu,
- Kombinationen von obigen Temperaturmessungen: Diese ergeben eine besonders genaue Aussagekraft bezüglich des Verhaltens des NOₓ-Speichers.

Die Temperatur wird so gemessen, daß sie direkt einen Rückschluß auf die Betriebsfähigkeit, den Betriebszustand und/oder auf die Speicherkapazität des NOₓ₋Speichers zuläßt. Darunter ist zu verstehen, daß bei einem derartigen Vorgehen ohne weitere Umrechnungsschritte von der gemessenen Temperatur ausgehend auf den Speicher zurückgeschlossen wird.

Für eine besonders signifikante Aussage der Temperaturmessung ist es vorteilhaft, wenn die Regenerationsphase innerhalb von Sekunden, insbesondere innerhalb einer Sekunde oder weniger abgeschlossen wird. Die Regeneration, welche eine exotherme Reaktion verursacht, ist durch einen Temperaturanstieg feststellbar. Diese Änderung der Temperatur und ihre Art der Änderung ist zum einen am Speichermaterial selbst, zum anderen an dem durch den Speicher strömenden Gas feststellbar. Je kürzer die Regenerationsphase zur Freisetzung der gespeicherten Stickoxide ist, umso deutlicher fällt der Temperaturanstieg aus. Angestrebt wird daher eine besonders schlagartig über den gesamten Querschnitt des NOₓ-Speichers entstehender Temperaturanstieg. Dieser ist dann innerhalb oder auch stromabwärts vom Speicher aufnehmbar. Dieser Temperaturanstieg kann weiterhin dadurch verstärkt werden, daß im NOₓ-Speicher ebenfalls eine Oxidation ausgelöst wird. Diese kann ausgelöst werden aufgrund der exothermen Reaktion oder durch andere Mittel, beispielsweise durch eine katalytische Beschichtung bzw. entsprechende Zugabe eines Gases in den NOₓ-haltigen Gasstrom, der den Speicher durchströmt.

Die Regenerationsphase selbst wird vorteilhafterweise durch Hinzufügen eines die Regeneration auslösenden Mittels in den NOₓ-haltigen Gasstrom verursacht, wobei das Mittel in der Lage ist, die gespeicherten Stickoxide zu lösen. Insbesondere ist das Mittel in der Lage, mit den Stickoxiden selbst an einer Reaktion teilzunehmen. Weiter erfolgt die Zugabe des die Regeneration auslösenden Mittels in der das NOₓ erzeugenden Quelle selbst. Insbesondere bei diesem Verfahren ist es vorteilhaft, wenn die im Speicher stattfindenden Reaktionen katalytisch durchgeführt werden. Dazu weist der NOₓ-Speicher beispielsweise neben dem Speichermaterial auch eine katalytische Beschichtung auf.

Für die Temperaturmessung genauso wie für ihre Auswertung ist es wichtig, daß sie selbst und/oder die Regeneration gesteuert erfolgt. Bei einer Regenerationsphase, die innerhalb von Zehntelsekunden abläuft, treten ansonsten zeitliche Ungenauigkeiten auf, die das oder die Meßergebnisse so verfälschen würden, daß eine Aussage bezüglich des Verhaltens des NOₓ-Speichers aus der Temperatur nicht möglich ist. Bei Verwendung einer gemeinsamen Elektronik für die Steuerung der Regeneration und der Temperaturmessung ergibt sich der weitere Vorteil, daß die Auswahl für einen definierten Zeitpunkt der Messung bzw. der Regeneration im Zusammenhang getroffen werden kann, beispielsweise abhängig von übergeordneten Gesichtspunkten wie der Betriebsweise einer Verbrennungskraftmaschine.

Für eine Aussage über die Betriebsfähigkeit, den Betriebszustand und/oder die Speicherkapazität des NOₓ-Speichers ist es auch vorteilhaft, die Temperaturmessung so durchzuführen, daß dadurch die Beobachtung des zeitlichen Verhaltens der Temperatur möglich ist. Bei Katalysatoren werden verschiedenste Temperaturmeßtechniken und Auswertemethoden verwandt, um die Aktivität des Katalysators und sein Verhalten beispielsweise für die Zukunft feststellen zu können. Insbesondere für ein Verfahren, bei dem die Temperatur im Zusammenhang mit einer Regenerationsphase des NOₓ-Speichers gemessen wird, sind derartige Meßverfahren ebenfalls anwendbar. Hierbei wird jedoch im Unterschied zu einem Katalysator bei einem NOₓ₋Speicher von einer Phase, in der der NOₓ-Speicher nicht im Speicherbetrieb arbeitet, auf seine Fähigkeit zur Speicherung geschlossen. Aus den schon im Stand der Technik genannten Schriften sind verschiedene Temperaturauswerteverfahren, Meßstellen und Meßfühler bekannt, die auch hier mit entsprechender Anpassung an den NOₓ-Speicher anwendbar sind. Dabei handelt es sich bei den Schriften insbesondere um die WO 94/21902, die EP 0 521 052 B1, die EP 0 545 974 B1, die EP 0 603 222 B1, die EP 0 545 976 und die DE 26 43 739.

Bei einem weiteren Verfahren wird zum Rückschluß auf die Betriebsfähigkeit, den Betriebszustand und/oder die Speicherkapazität des NOₓ-Speichers ein funktionaler Zusammenhang zwischen der Temperatur, einer Charakteristik des NOₓ-Speichers und/oder eines Gasbestandteiles des NOₓ-haltigen Gases genutzt. Dazu können Erfahrungswerte über das Langzeitverhalten des NOₓ-Speichers ebenso wie Zusammenhänge, die sich aus der Verarbeitung verschiedener Materialien für den NOₓ₋Speicher ergeben, genutzt werden. Bezüglich eines oder mehrerer Gasbestandteiles sind deren Entropien oder Enthalpien geeignet, den NOₓ-Speicher zu überwachen. Dieses ist beispielsweise durch Abwandlung des aus der EP 0 298 240 B1 bekannten Verfahrens zum Überwachen des Schadstoffgehaltes von Abgasen bei Brennkraftmaschinen möglich.

Ein weiteres Verfahren zur Überwachung des NOₓ-Speichers sieht die folgenden Schritte vor: Daß
- das im NOₓ-Speicher gespeicherte NOₓ in Abhängigkeit vom NOₓ-haltigen Gasstrom berechnet wird,
- bei Überschreiten eines vorgebbaren Grenzwertes für das NOₓ eine Regenerierung ausgelöst wird,
- wobei aus der dabei gemessenen Temperatur durch Vergleich mit einem vorgebbaren Temperaturwert und/oder einer vorgebbaren Temperaturbrandbreite der Rückschluß auf die Betriebsfähigkeit, den Betriebszustand und/oder auf die Speicherkapazität des NOₓ-Speichers erfolgt.

In einer Steuerung oder auch Regelung, die beispielsweise über eine die NOₓ-Quelle steuernde Elektronik erfolgt, wird in einer Ausbildung des Verfahrens festgestellt, wie groß der Volumenstrom und der NOₓ-Anteil im Gasstrom ist, der durch den Speicher strömt. Der Volumenstrom ist über-bekannte Meßmethoden feststellbar, der NOₓ-Anteil beispielsweise bei einer Verbrennungskraftmaschine aus der Berechnung des Luft-Kraftstoffgemisches, welches dieser zugeführt wird. Zur Berechnung sind aber auch andere Daten der Verbrennungsmaschine nutzbar, wie deren Betriebs- und/oder Zustandsdaten. Diese sind auch in zumindest einem Kennfeld aufnehmbar und so abspeicherbar, daß sie ein Motormanagement nutzen kann. Vergleichbares ist auch mit geeigneten Daten bei anderen Anwendungsgebieten der Erfindung anwendbar. Um zu vermeiden, daß Stickoxide ungespeichert den Speicher durchströmen, ist der Grenzwert so festgelegt, daß dieses ausschließbar ist. Dieser Grenzwert muß nicht konstant festgelegt sein. Vielmehr ist er beispielsweise aufgrund von Alterung des NOₓ-Speichers über einen langen Betriebszeitraum auch an die Funktionsfähigkeit desselben anpaßbar.

Der vorgebbare Temperaturwert und/oder die vorgebbare Temperaturbandbreite sind aus Erfahrungswerten für den jeweils verwendeten NOₓ-Speicher herauskristallisierbar und in einer geeigneten Elektronik abspeicherbar. Diese Erfahrungswerte können auch in Form eines funktionalen Zusammenhanges vorgegeben werden, wobei verschiedenste Parameter wie Alterung, Temperatur, Betriebsweise und anderes einfließen können.

Bei einer Weiterentwicklung des Verfahrens wird ab einer definierten gemessenen Temperatur ein Signal ausgelöst, wobei das Signal von einer Wertung der Betriebsfähigkeit, des Betriebszustandes und/oder der Speicherkapazität des NOₓ-Speichers abhängt. In Verbindung mit zur Verfügung stehenden Daten über einen Speicher und vorgebbaren Bewertungskriterien ist die Auswertung bezüglich der gemessenen Temperatur so gestaltbar, daß dem Nutzer jedwede Information wie die noch verfügbare Speicherkapazität, die wahrscheinliche Lebensdauer oder ähnliches zur Verfügung steht. Das ab einer definierten, d. h. vorgebbaren Temperatur ausgelöste Signal ist insbesondere auch ein Warnsignal, das eine Betriebsstörung rechtzeitig anzeigt. Weiterhin ist das so ausgelöste Signal so nutzbar, daß dadurch eine Änderung des Abgasstromes bewirkt wird. Befindet sich beispielsweise der NOₓ-Speicher in einem Zustand, der nur noch eine äußerst geringe Speicherkapazität aufweist oder es liegt ein Schaden am Speicher vor, wird vorzugsweise die Betriebsweise der NOₓ-Quelle geändert. Beispielsweise ist diese dann in ein Notprogramm schaltbar.

Ein besonders bevorzugtes Anwendungsgebiet des Verfahrens ist eine Verbrennungskraftmaschine, insbesondere ein Diesel- oder Magermotor, die vorzugsweise unter Lastwechseln arbeitet. Ein derartiges Verfahren ist vor allem bei Kraftfahrzeugen einsetzbar. Eine Weiterentwicklung sieht vor, daß in einen NOₓ₋Speicherkatalysator als NOₓ-Speicher zur Regenerierung ein HC-angereicherter und sauerstoffreicher Gasstrom eingeleitet wird, wobei der Gasstrom vorzugsweise soweit mit HC angereichert wird, daß das gesamte gespeicherte und umwandelbare NOₓ umgesetzt wird. Dies erfolgt im allgemeinen zunächst durch Bildung von H₂O und CO aus dem HC und dem Sauerstoff, wobei das CO dann mit dem NOₓ zu CO₂ und N₂ reagiert. Eine andere Weiterentwicklung nutzt eine fette Anreicherung des Verbrennungsgemisches im Motor zur Erzeugung ausreichender Kohlenwasserstoffe und CO. Durch Bildung von H₂O und CO aus Kohlenwasserstoffen und Sauerstoff vor dem NOₓ-Speicher im Motor wird wiederum nachfolgend der NOₓ-Speicher regeneriert. Kohlenwasserstoffe und/oder CO haben sich dabei als geeignet zur Regenerierung erwiesen.

Der Speicherkatalysator weist vorzugsweise eine Beschichtung aus einer Mischung aus Oxidations- und Speichermaterialien sowie ein katalytisch aktives Material auf. Er kann aber selbst auch vollständig aus einer Mischung dieser Materialien aufgebaut sein. Je nach dem, wie groß die Anreicherung mit Kohlenwasserstoffen im Gasstrom ist, fällt der Temperaturanstieg in der Regenerationsphase des NOₓ-Speichers aus. Über die Reaktion des Stickoxides mit Kohlenwasserstoff zu Stickstoff, Wasser und Kohlendioxid wird der Speicher möglichst vollständig freigesetzt. Als besonders vorteilhaft hat es sich herausgestellt, die Reaktion innerhalb von etwa einer Sekunde oder weniger ablaufen zu lassen.

In einem Beispiel für einen Magermotor entspricht ein Liter Speichervolumen etwa 2 g gespeichertes Stickstoffoxid. Dieses entspricht etwa einer Fahrstrecke zwischen einem und zwei Meilen, je nach Betriebsweise eines Fahrzeuges. Dann muß der NOₓ-Speicher wieder regeneriert werden. Während der NOₓ-Speicherkatalysator etwa eine Wärmekapazität von 600 J/1/K aufweist, wird eine exotherme Energie von etwa 14 bis 20 kJ je 2 g NOₓ frei. Bei einer 100 %-Umwandlung der gespeicherten Stickoxide ist ein Temperaturanstieg von 23 K aufgrund der CO-Reaktion sowie ein Temperaturanstieg aufgrund der HC-Reaktion von 48 K feststellbar gewesen.

Die Kohlenwasserstoffanreicherung erfolgt vorteilhafterweise so, daß das vollständig gespeicherte Stickoxid umgesetzt wird. Unter der Voraussetzung eines ausreichenden HC-Gehaltes im Abgas ist die Temperaturerhöhung proportional der gespeicherten Stickoxid-Menge. Die HC-Zugabe ist weiterhin so steuerbar, daß durch Zugabe in geringeren Dosierungen der Speicher nach und nach regeneriert wird. Bei Verwendung entsprechender Meßsensoren ist wiederum eine Aussage über die Fähigkeit von Abschnitten des Speichers möglich. Ist der zugegebene Kohlenwasserstoff zur Regeneration größer als notwendig, werden die Stickoxide vollständig umgesetzt, vorausgesetzt, daß sie auch vollständig aus dem Speicher lösbar sind. Die nicht umgesetzten Kohlenwasserstoffe werden vorteilhafterweise in einem nachfolgenden Dreiwege-Katalysator umgesetzt. Durch Verwendung eines elektronischen Motormanagements für die Temperaturmessung, die Regenerierung und den Rückschluß auf die Betriebsfähigkeit, den Betriebszustand und/oder auf die Speicherkapazität besteht jederzeit Zugriff auf die das Stickoxid verursachende Quelle, den Verbrennungsmotor. Zur Regenerierung kann beispielsweise ein Zündaussetzer verursacht werden, wodurch unverbrannte Kohlenwasserstoffe zum NOₓ-Speicher gelangen.

Weitere vorteilhafte Ausgestaltungen und Merkmale der Erfindung werden in der folgenden Zeichnung dargestellt. Es zeigen:
- Fig. 1: eine Verbrennungskraftmaschine mit einem nachgeschalteten NOₓ₋Speicherkatalysator und Dreiwege-Katalysator,
- Fig. 2: einen zeitlichen Verlauf einer Regenerationsphase eines NOₓ₋Speichers,
- Fig. 3: verschiedene Verhaltensweisen unterschiedlicher NOₓ-Speicher über die Zeit und
- Fig. 4: eine Anordnung einer NOₓ-Quelle mit einem vorgeschalteten Oxidationskatalysator.

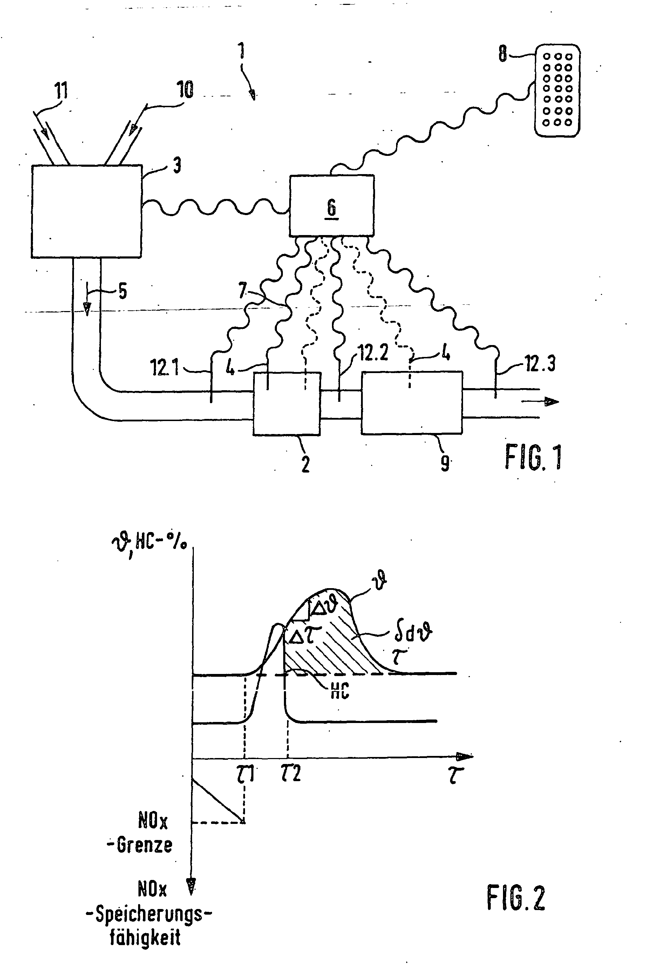

Fig. 1 zeigt eine Anordnung 1 zur Überwachung eines regenerierbaren NOₓ₋Speichers 2. Die Anordnung 1 weist mindestens neben dem regenerierbaren NOₓ₋Speicher 2 Mittel zur Regenerierung des NOₓ-Speichers 2, in diesem Falle die vorgeschaltete Brennkraftmaschine 3, einen Temperatursensor 4 im NOₓ-Speicher oder im Abgasstrom 5 zur Überwachung des Speichers 2 und ein elektronisches Bauteil 6, das eine Verbindung 7 zu dem Temperatursensor 4 hat. Das elektronische Bauteil 6 ist vorzugsweise eine Motorsteuerung. Diese Motorsteuerung ist programmierbar, wobei Eingaben über eine Eingabeeinheit 8 erfolgen. Dem NOₓ-Speicher 2 ist ein Dreiwege-Katalysator 9 nachgeschaltet. Soll der NOₓ-Speicher 2 regeneriert werden, da das elektronische Bauteil 6 aus dem der Verbrennungskraftmaschine 3 zuströmenden Brennstoff- 10 und Luftstrom 11 im Zusammenhang mit der Betriebsweise einen Grenzwert für die Stickoxidspeicherfähigkeit des NOₓ-Speichers berechnet hat, wird die Verbrennungskraftmaschine 3 so angesteuert, daß diese einen Zündaussetzer aufweist und dadurch der Abgasstrom 5 mit unverbrannten Kohlenwasserstoffen angereichert wird. Andere Maßnahmen, wie eine entsprechende Brennstoffeinspritzung in den Abgasstrom 5, sind ebenfalls durchführbar. Ist der zugesetzte und unverbrannte Kohlenwasserstoff-Anteil höher als für die Regenerierung benötigt, wird der Überschuß im Katalysator 9 umgesetzt. Weiterhin weist die Anordnung 1 eine erste Lambda-Sonde 12.1 vor dem NOₓ-Speicher 2, eine zweite Lambda-Sonde 12.2 zwischen dem Speicher 2 und dem Katalysator 9 und eine dritte Lambda-Sonde 12.3 hinter dem Katalysator 9 auf. Sie dienen zur Überprüfung des Kohlenwasserstoffgehaltes des Abgasstromes 5 und können gleichzeitig zur Steuerung bzw. Regelung der Verbrennungskraftmaschine 3 genutzt werden. Anstelle der Lambda-Sonden 12.1, 12.2 und 12.3 sind aber auch Temperatursensoren anbringbar. Der Dreiwege-Katalysator 9 selbst weist ebenfalls einen Temperatursensor 4 zur Überwachung auf. Die gestrichelte Verbindungslinie von diesem Temperatursensor 4 zum elektronischen Bauteil 6 zeigt die Optionalität dieser Überwachung an. Der NOₓ-Speicher 2 weist in einer anderen Anordnung zwei oder mehr Temperatursensoren 4 auf, was gestrichelt angedeutet ist. Entsprechend der dargestellten Anordnung 1 ist somit eine Vorrichtung ausbildbar zur Überwachung des regenerierbaren NOₓ-Speichers 2 in dem Abgasstrang 13, durch den das NOₓ-haltige Gas 5 strömt, wobei der Speicher 2 ein Katalysator ist. Der Katalysator weist eine Oxidationsfähigkeit auf, die zumindest Kohlenmonoxid und Kohlenwasserstoff betrifft. Für die Temperaturmessung hat es sich bei einer derartigen Vorrichtung als vorteilhaft erwiesen, wenn der Temperatursensor etwa hinter einem Viertel der Länge des Katalysators, von einer Anströmseite betrachtet, in diesem angeordnet ist. Vorzugsweise ist dieser etwa auf der Hälfte der Länge des Katalysators angeordnet.

Fig. 2 zeigt ein mögliches Verhalten der Temperatur in einem NOₓ-Speicherkatalysator über die Zeit. Bei Erreichen einer Stickoxid-Grenze wird zum Zeitpunkt τ1 der Abgasstrom mit unverbrannten Kohlenwasserstoffen bis zum Zeitpunkt τ2 angereichert. Daraufhin findet im NOₓ-Speicherkatalysator eine exotherme Reaktion statt, die sich als Temperaturanstieg auswirkt. Dieser ist meßbar und auswertbar, was durch die Steigung Δ'/Δτ und die Integrierung angedeutet ist.

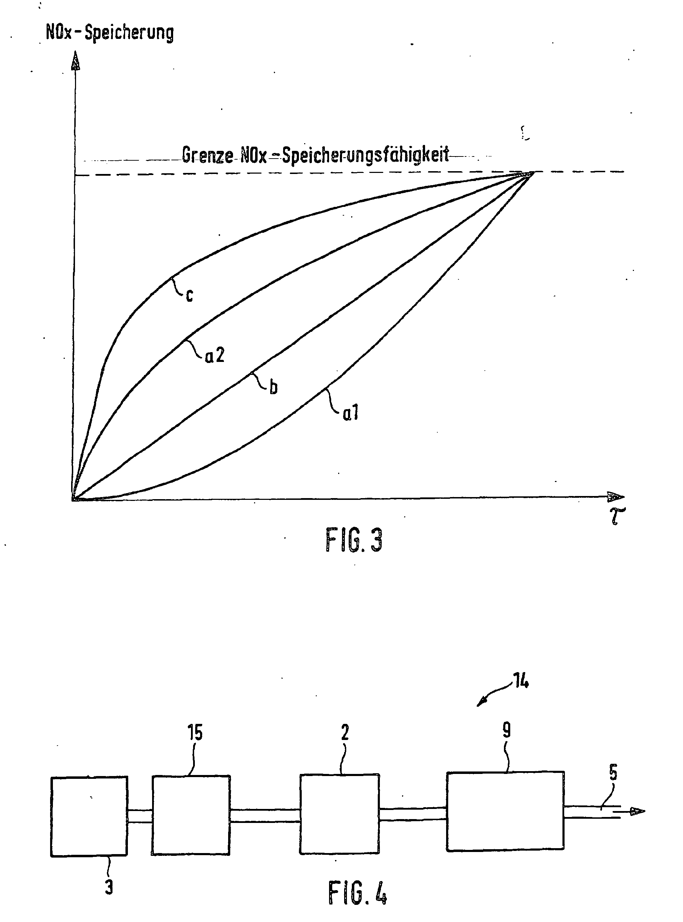

Fig. 3 zeigt verschiedene Verläufe der Speicherung von Stickoxiden in einem NOₓ₋Speicher. Der Verlauf a1 erfolgt entsprechend einer monoton wachsenden Hyperbelfunktion, a2 entsprechend einer monoton fallenden Hyperbelfunktion, der Verlauf b linear und der Verlauf c entsprechend einer Wurzelfunktion. Neben diesen Verläufen sind auch sinusförmige Funktionen oder andere möglich. Da die Speicherung von Stickoxiden eine endotherme Reaktion auslöst, bedeutet dieses ein Absinken der Temperatur des Speichers. Ist nun für einen Speicher der Verlauf der Speicherung bekannt, kann daraus mit der Temperatur eine Basis als Vergleichswert für eine Temperaturmessung geschaffen werden. Diese Basis läßt dann im Zusammenhang mit der Messung einer Temperatur unmittelbar vor, während oder unmittelbar nach der Regeneration eine Aussage über den NOₓ-Speicher zu. Zur Erlangung dieser Basis ist es beispielsweise möglich, über den elektrischen Widerstand des Speichers oder aufgrund von Erfahrungswerten eine Basistemperatur zu gewinnen.

Figur 4 zeigt eine zweite Anordnung 14 mit einem Oxidationskatalysator 15 in Strömungsrichtung vor dem NOₓ-Speicher 2, der näher zur NOₓ-Quelle 3 als zum NOₓ-Speicher 2 angeordnet ist. Bei unmittelbaren Anschluß an die NOₓ-Quelle 2 erhitzt der Abgasstrom 5 den Oxidationskatalysator 15 zügigst auf. Für die Regenerierung hat es sich zur verbesserten Aufnahme und Ausbildung eines charakteristischen Temperaturprofiles am NOₓ-Speicher 2 als zweckmäßig erwiesen, wenn das Abgas zur Regenerierung einen geringeren Sauerstoffanteil als im Normalbetrieb aufweist. Dieses ist beispielsweise durch Anfetten eines Verbrennungsgemisches einer Verbrennungskramnaschine möglich. Eine Sauerstoffspeicherfähigkeit des NOₓ-Speichers 2 ist geringer als die des nachfolgenden Drei-Wege-Katalysators 9, erfindungsgemäß etwa nur ein Drittel, insbesondere weniger als ein Zehntel oder noch geringer. Der Abgasstrom 5 kann dann noch so fett sein, er wird auf jeden Fall umgesetzt, während der NOₓ-Speicher 2 wiederum nicht zu stark sich aufgrund einer exothermen Reaktion erhitzt. Der Oxidationskatalysator 15 hat daher ebenfalls eine größere Sauerstoffspeicherfähigkeit als der NOₓ-Speicher 2 aber eine kleinere Sauerstoffspeicherfähigkeit als der Drei-Wege-Katalysator 9. Der NOₓ₋Speicher 2 weist insbesondere höchstens eine verschwindend geringe Fähigkeit zur Speicherung von Sauerstoff auf bzw. gar keine Fähigkeit dazu.

Der vorliegenden Erfindung gelingt es, eine sichere Überwachung des Stickoxidausstoßes von NOₓ-Quellen durch Verwendung und Überprüfung eines Speichers zu schaffen und dadurch zukünftige Abgasgrenzwerte beispielsweise bei Diesel- oder Magermotoren für Kraftfahrzeuge einhalten zu können.

### Bezugszeichenliste

- 1: Anordnung
- 2: NOₓ-Speicher
- 3: Verbrennungskraftmaschine
- 4: Temperatursensor
- 5: Abgasstrom
- 6: elektronisches Bauteil
- 7: Verbindung
- 8: Eingabeeinheit
- 9: Dreiwege-Katalysator
- 10: Brennstoffstrom
- 11: Luftstrom
- 12.1,12.2.,12.3: Lambda-Sonde
- 13: Abgasstrang
- 14: zweite Anordnung
- 15: Oxidationskatalysator

## Patentansprüche

1. Anordnung zur Überwachung eines regenerierbaren NOₓ-Speichers (2) mittels Temperaturmessung, die wenigstens
- einen regenerierbaren NOₓ-Speicher (2),
- Mittel zur Regenerierung des NOₓ-Speichers (2),
- einen Temperatursensor (4) zur NOₓ-Speicher-Überwachung im Abgasstrom (5),
- ein elektronisches Bauteil (6), das eine Verbindung zu dem Temperatursensor (4) hat, einen Grenzwert für eine Stickoxidspeicherfähigkeit des NOₓ-Speichers (2) berechnet und bei Überschreiten eines vorgebbaren Grenzwertes für das NOₓ eine Regenerierung auslöst,
- einen Dreiwege-Katalysator (9), der in einer Durchströmungsrichtung durch den NOₓ-Speicher (2) gesehen, hinter diesem liegt,
- eine NOₓ-Quelle (3) in Strömungsrichtung vor dem NOₓ-Speicher (2) und
- ein Management zur Steuerung und/oder Regelung zumindest des elektronischen Bauteils (6) zur Temperaturmessung wie zur Regenerierung aufweist,
**dadurch gekennzeichnet, daß**
eine Sauerstoffspeicherfähigkeit des NOₓ-Speichers (2) bezogen auf einen Normzustand etwa ein Drittel oder geringer ist als die des nachfolgenden Drei-Wege-Katalysators (9).

2. Anordnung nach Anspruch 1, die weiterhin zumindest
- eine Lambda-Sonde (12.1) zur Überprüfung des Kohlenwasserstoff-C-Gehaltes vor dem NOₓ-Speicher (2),
- eine Lambda-Sonde (12.2) zur Überprüfung des Kohlenwasserstoff-C-Gehaltes nach dem NOₓ-Speicher (2) und/oder
- eine Verbrennungskraftmaschine, in Strömungsrichtung vor dem NOₓ₋Speicher (2).

3. Anordnung (1) nach Anspruch 1 oder 2 mit einem Oxidationskatalysator (15) in Strömungsrichtung vor dem NOₓ-Speicher (2), der vorzugsweise näher zur NOₓ-Quelle (3) als zum NOₓ-Speicher (2) angeordnet ist, insbesondere sich unmittelbar an die NOₓ-Quelle (3) anschließt.

4. Anordnung nach einem der Ansprüche 1, 2 oder 3, **dadurch gekennzeichnet, daß** eine Sauerstoffspeicherfähigkeit des NOₓ-Speichers (2) geringer als die des nachfolgenden Drei-Wege-Katalysators (9) ist und etwa ein Zehntel oder weniger beträgt.

5. Anordnung nach Anspruch 3, **dadurch gekennzeichnet, daß** der Oxidationskatalysator (15) eine größere Sauerstoffspeicherfähigkeit als der NOₓ-Speicher (2) aber eine kleinere Sauerstoffspeicherfähigkeit als der Drei-Wege-Katalysator (9) hat.

6. Anordnung nach einem der Ansprüche 1 bis 5, **dadurch gekennzeichnet, daß** der NOₓ-Speicher (2) höchstens eine verschwindend geringe Fähigkeit zur Speicherung von Sauerstoff aufweist.

7. Anordnung nach einem der Ansprüche 1 bis 6, in einem Abgasstrang (13), durch den ein NOₓ-haltiges Gas (5) strömt, **dadurch gekennzeichnet, daß** der regenerierbare NOₓ-Speicher (2) ein Katalysator ist, der eine Oxidationsfähigkeit besitzt sowie eine Speicherfähigkeit für NOₓ aufweist, mit einem Temperatursensor (4).

8. Anordnung nach Anspruch 7, **dadurch gekennzeichnet, daß** die Oxidationsfähigkeit zumindest die Oxidation von Kohlenmonoxid und Kohlenwasserstoffe betrifft.

9. Anordnung nach einem der vorhergehenden Ansprüche, **dadurch gekennzeichnet, daß** der Temperatursensor (4) hinter etwa einem Viertel einer Länge des Katalysators, von einer Anströmseite aus betrachtet, im Katalysator angeordnet ist, vorzugsweise etwa auf der Hälfte der Länge des Katalysators.

## Claims

1. Arrangement for monitoring a regenerateable NOₓ-storage device (2) by means of temperature measurement, comprising at least
- a regenerateable NOₓ-storage device (2),
- means for the regeneration of the NOₓ-storage device (2),
- a temperature sensor (4) for the NOₓ-storage device monitoring operation in the exhaust gas flow (5),
- an electric component (6), which has a connection to the temperature sensor (4), which calculates a limit regarding a nitrogen oxides storage capacity of the NOₓ-storage device (2) and which triggers a regeneration operation when a predetermineable limit NOₓ is exceeded,
- a three-way catalytic converter (9), downstream of the NOₓ-storage device (2) in a flow through direction through the NOₓ-storage device (2),
- a NOₓ-source (3) upstream of the NOₓ-storage device (2) in the flow direction and
- a management system for controlling and/or regulating of at least the electronic component (6) for the temperature measurement operation and for the regeneration operation,
**characterised in that**
an oxygen storage capability of the NOₓ-storage device (2) is approximately a third or less of that of a subsequent three-way catalytic converter (9) with regard to a standard condition.

2. Arrangement according to claim 1 which further has at least
- a lambda probe (12.1) for checking the hydrocarbon-C-content upstream of the NOₓ-storage device (2)
- a lambda probe (12.2) for checking the hydrocarbon-C-content downstream of the NOₓ-storage device (2) and/or
- an internal combustion engine, upstream of the NOₓ-storage device (2) in the flow direction.

3. Arrangement (1) according to claim 1 or 2 with an oxidation catalytic converter (15) upstream of the NOₓ-storage device (2) in the flow direction, which is preferably arranged closer to the NOₓ-source (3) than to the NOₓ₋storage device (2) and which in particular directly adjoins the NOₓ-source (3).

4. Arrangement according to one of claims 1, 2 or 3, **characterised in that** an oxygen storage capability of the NOₓ-storage device (2) is less than that of the subsequent three-way catalytic converter (9) and is about a tenth or less.

5. Arrangement according to claim 3, **characterised in that** the oxidation catalytic converter (15) has a greater oxygen storage capability than the NOₓ₋storage device (2) but a smaller oxygen storage capability than the three-way catalytic converter (9).

6. Arrangement according to one of claims 1 to 5, **characterised in that** the NOₓ-storage device (2) has at most a vanishingly low capability for the storage of oxygen.

7. Arrangement according to one of claims 1 to 6 in an exhaust gas line (13), through which an NOₓ-bearing gas (5) flows, **characterised in that** the regenerateable NOₓ-storage device (2) is a catalytic converter which has an oxidation capability and which has a storage capability for NOₓ with a temperature sensor (4).

8. Arrangement according to claim 7, **characterised in that** the oxidation capability concerns at least the oxidation of carbonmonoxid and hydrocarbons.

9. Arrangement according to one of the preceding claims, **characterised in that** the temperature sensor (4) is arranged downstream of approximately a quarter of the length of the catalytic converter, as considered from an inflow end, in the catalytic converter, preferable approximately at half the length of the catalytic converter.

## Revendications

1. Ensemble pour surveiller au moyen de mesures de température un accumulateur de NOₓ régénérable (2) qui a au moins
- un accumulateur de NOₓ régénérable (2),
- des moyens pour régénérer l'accumulateur de NOₓ (2),
- un capteur de température (4) pour la surveillance de l'accumulateur de NOₓ dans le flux de gaz d'échappement (5),
- une pièce de construction électronique (6) qui a une connexion avec le capteur de température (4), qui calcule une valeur limite pour une capacité d'accumulation d'oxyde d'azote de l'accumulateur de NOₓ (2) et qui déclenche une régénération quand une valeur limite pour le NOₓ pouvant être prédéterminée est dépassée.
- un catalyseur à trois voies (9) qui, vu dans un sens d'écoulement à travers l'accumulateur de NOₓ (2), se trouve en aval de celui-ci,
- une source de NOₓ (3) dans le sens d'écoulement en amont de l'accumulateur de NOₓ (2) et
- une gestion pour la commande et/ou pour le réglage d'au moins la pièce de construction électrique (6) pour mesurer la température ainsi que pour la régénération,
**caractérisé en ce qu'**une capacité d'accumulation d'oxygène de l'accumulateur de NOₓ (2) est environ d'un tiers ou moins plus faible que celle du catalyseur à trois voies (9), en référence à des conditions normales.

2. Ensemble selon la revendication 1 qui en outre a au moins
- une sonde lambda (12.1) pour vérifier la teneur en hydrocarbures-C- en amont de l'accumulateur de NOₓ (2),
- une sonde lambda (12.1) pour vérifier la teneur en hydrocarbures-C- en aval de l'accumulateur de NOₓ (2) et/ou
- une machine à combustion interne, dans le sens d'écoulement en amont de l'accumulateur de NOₓ (2).

3. Ensemble (1) selon la revendication 1 ou 2 avec un catalyseur d'oxydation (15) dans le sens d'écoulement en amont de l'accumulateur de NOₓ (2), lequel catalyseur d'oxydation est agencé de préférence plus à proximité de la source de NOₓ (3) que de l'accumulateur de NOₓ (2), et qui suit notamment directement la source de NOₓ (3).

4. Ensemble selon l'une des revendications 1, 2 ou 3, **caractérisé en ce qu'**une capacité d'accumulation d'oxygène de l'accumulateur de NOₓ (2) est plus faible que celle du catalyseur à trois voies (9) subséquent et comporte environ un dixième ou moins.

5. Ensemble selon la revendication 3, **caractérisé en ce que** le catalyseur d'oxydation (15) a une capacité d'accumulation d'oxygène plus élevée que l'accumulateur de NOₓ (2), mais une capacité d'accumulation d'oxygène plus faible que le catalyseur à trois voies (9).

6. Ensemble selon l'une des revendications 1. à 5, **caractérisé en ce que** l'accumulateur de NOₓ (2) a tout au plus une capacité infiniment petite pour accumuler de l'oxygène.

7. Ensemble selon l'une des revendications 1 à 6 dans un brin de gaz d'échappement (13) à travers lequel s'écoule un gaz (5) contenant du NOₓ, **caractérisé en ce que** l'accumulateur de NOₓ régénérable (2) est un catalyseur qui possède une capacité d'oxydation ainsi qu'une capacité d'accumulation pour le NOₓ avec un capteur de température (4).

8. Ensemble selon la revendication 7, **caractérisé en ce que** la capacité d'oxydation concerne au moins l'oxydation de monoxyde de carbone et d'hydrocarbures.

9. Ensemble selon l'une des revendications précédentes, **caractérisé en ce que** le capteur de température(4) est agencé derrière environ un quart d'une longueur du catalyseur, de préférence environ sur la moitié de la longueur du catalyseur, vu d'un coté d'arrivée du courant.
